# FASCICULE DE BREVET EUROPEEN

(11) **EP 4 292 920 B1**
(45) Date de publication et mention de la délivrance du brevet: **05.03.2025**
(21) Numéro de dépôt: 23178112.1
(22) Date de dépôt: 07.06.2023
(51) Int. Cl.: B64C 1/14, B64C 7/00, B64D 27/18, F16K 15/14, F16K 17/02

(54) **AÉRONEF ÉQUIPÉ D'AU MOINS UN DISPOSITIF DE SURPRESSION**
FLUGZEUG MIT MINDESTENS EINER ÜBERDRUCKVORRICHTUNG
AIRCRAFT HAVING AT LEAST ONE OVERPRESSURE DEVICE

(30) Priorité: 16.06.2022 FR 2205852
(43) Date de publication de la demande: 20.12.2023
(73) Titulaire: AIRBUS OPERATIONS (S.A.S.), 31060 Toulouse (FR)
(72) Inventeur: LALO, Olivier, 31060 TOULOUSE (FR)
(74) Mandataire: Fantin, Laurent

(56) Documents cités:
- WO-A1-2010/066958
- CN-A- 110 566 924

## Description

La présente demande se rapporte à un aéronef équipé d'au moins un dispositif de surpression comprenant une paroi mobile maintenue en position fermée tant que sa déformation ne dépasse pas un état déformé donné.

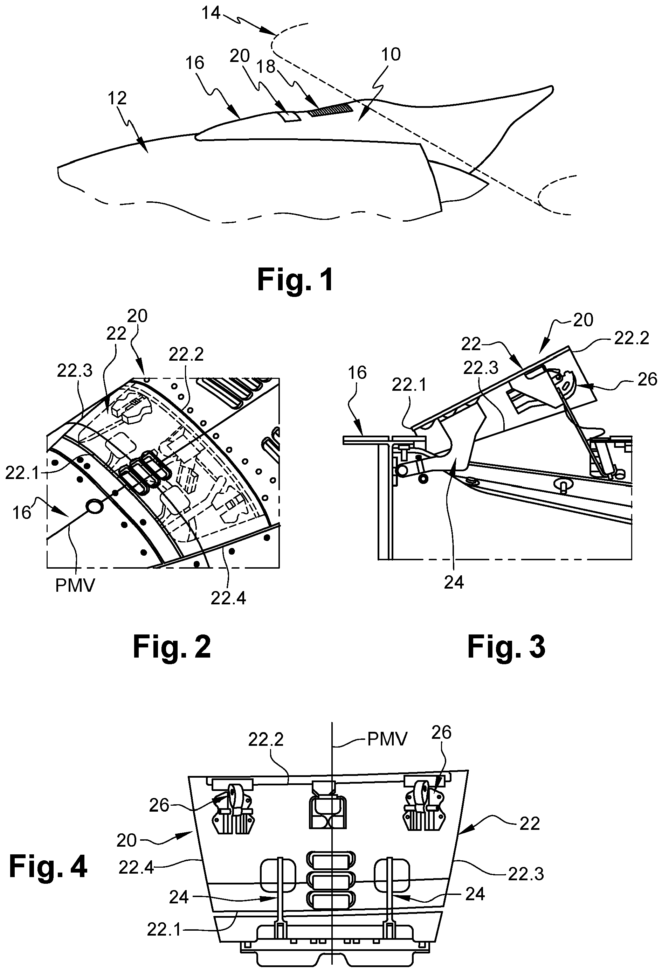

Selon un mode de réalisation visible sur la figure 1, un aéronef comprend plusieurs mâts d'aéronef 10 reliant chacun un ensemble de propulsion 12 et une aile 14.

Chaque mât 10 comprend une structure primaire assurant la transmission des efforts entre l'ensemble de propulsion 12 et l'aile 14 qu'il relie ainsi qu'une structure secondaire 16 qui enveloppe la structure primaire et forme une surface aérodynamique. Cette structure secondaire 16 comprend un échappement d'air chaud 18 pourvu d'une grille statique ainsi qu'un dispositif de surpression 20.

Lorsque la pression dans une zone intérieure située au-dessous de la structure secondaire 16 est inférieure à une valeur donnée, le dispositif de surpression 20 est dans une position fermée. Dès que, de manière accidentelle, la pression dans la zone intérieure dépasse cette valeur donnée, le dispositif de surpression 20 s'ouvre et occupe une position ouverte.

Selon un mode de réalisation visible sur les figures 2 à 4, le dispositif de surpression 20 comprend une porte 22 qui présente des bords avant et arrière 22.1, 22.2 sensiblement perpendiculaires à un plan médian vertical PMV ainsi que des bords latéraux 22.3, 22.4 sensiblement symétriques par rapport au plan médian vertical PMV.

Le dispositif de surpression 20 comprend une articulation 24 pour relier la porte 22 à la structure secondaire 16, comportant des cols de cygne par exemple, positionnée au niveau du bord avant 22.1 et permettant à la porte 22 de basculer entre les positions fermée et ouverte. Pour maintenir la porte 22 dans la position fermée, le dispositif de surpression 20 comprend deux systèmes de verrouillage 26 situés au niveau du bord arrière 22.2 et positionnés de manière symétrique par rapport au plan médian vertical PMV. Chaque système de verrouillage 26 comprend un verrou mobile entre un état verrouillé dans lequel il maintient la porte 22 dans la position fermée et un état déverrouillé dans lequel il autorise la porte 22 à basculer dans la position ouverte ainsi qu'un ressort permettant de maintenir le verrou dans l'état verrouillé à l'encontre d'efforts, notamment ceux générés par la pression dans la zone intérieure, ainsi que ceux générés par la pression extérieure due à la dépression aéronautique. Chaque système de verrouillage 26 comprend un système de réglage permettant d'ajuster la pression à partir de laquelle le verrou bascule de l'état verrouillé à l'état déverrouillé et autorise la porte 22 à pivoter dans la position ouverte.

En pratique, le basculement de la porte 22 dans la position ouverte n'intervient que très rarement.

Ce mode de réalisation n'est pas pleinement satisfaisant car l'articulation 24 et les systèmes de verrouillage 26 sont relativement encombrants, coûteux et présentent une masse importante au regard de la fréquence du basculement de la porte 22 dans la position ouverte. La présente invention vise à remédier à tout ou partie des inconvénients de l'art antérieur.

Le document WO2010066958 divulgue une trappe de surpression destinée à être montée sur une paroi d'une nacelle pour turboréacteur.

A cet effet, l'invention a pour objet un aéronef comprenant au moins un dispositif de surpression comportant au moins une partie fixe ainsi qu'au moins une paroi mobile configurée pour occuper une position fermée dans laquelle la paroi mobile obture une ouverture et isole des zones intérieure et extérieure positionnées de part et d'autre de la paroi mobile ainsi qu'une position ouverte dans laquelle la paroi mobile dégage au moins partiellement l'ouverture, la paroi mobile présentant une face intérieure orientée vers la zone intérieure et une face extérieure orientée vers la zone extérieure, le dispositif de surpression comportant au moins une articulation reliant la paroi mobile et la partie fixe ainsi qu'au moins un système de maintien configuré pour maintenir la paroi mobile dans la position fermée tant qu'une pression dans la zone intérieure est inférieure à une valeur de pression donnée, la paroi mobile comprenant au moins un bord.

Selon l'invention, la paroi mobile est configurée pour se déformer de sorte que la paroi mobile occupe un état déformé donné lorsque la pression dans la zone intérieure est à la valeur de pression donnée. En complément, le système de maintien comprend au moins une première fente traversant la paroi mobile et débouchant au niveau du bord de la paroi mobile ainsi que, pour chaque fente, un premier élément de maintien solidaire de la partie fixe, le premier élément de maintien et la première fente étant configurés de sorte que :
- le premier élément de maintien soit logé dans la première fente et maintienne la paroi mobile dans la position fermée tant que la paroi mobile n'est pas à l'état déformé donné,
- le premier élément de maintien ne soit plus logé dans la première fente et ne maintienne plus la paroi mobile dans la position fermée dès que la paroi mobile est à l'état déformé donné.

En complément, chaque élément de maintien se présente sous la forme d'une vis qui comprend un corps vissé dans la partie fixe ainsi qu'une tête fraisée, chaque fente présentant un chant qui s'évase de la face intérieure vers la face extérieure de la paroi mobile, la tête présentant une section supérieure à la plus petite section de la fente dans laquelle est logé l'élément de maintien.

Un tel système de maintien présente un encombrement, des coûts et une masse inférieurs à ceux des systèmes de verrouillage de l'art antérieur.

Selon une autre caractéristique, la paroi mobile comprend des premier et deuxième bords transversaux ainsi que des premier et deuxième bords latéraux, l'articulation étant positionnée au niveau du premier bord transversal. En complément, la paroi mobile est configurée pour se déformer selon une direction de déformation sensiblement perpendiculaire aux premier et deuxième bords transversaux de sorte que les premier et deuxième bords transversaux se rapprochent lorsque la paroi mobile se déforme, le système de maintien comprenant au moins une fente qui débouche sur l'un des premier et deuxième bords latéraux.

Selon une autre caractéristique, le système de maintien comprend des première et deuxième fentes débouchant sur chacun des premier et deuxième bords latéraux.

Selon une autre caractéristique, la paroi mobile est sensiblement symétrique par rapport à un plan médian vertical sensiblement perpendiculaire aux premier et deuxième bords transversaux. En complément, les première et deuxième fentes sont sensiblement symétriques par rapport au plan médian vertical.

Selon une autre caractéristique, la paroi mobile comprend une longueur correspondant à une distance séparant les premier et deuxième bords transversaux. En complément, les première et deuxième fentes sont séparées du deuxième bord transversal d'une distance inférieure au 1/3 de la longueur de la paroi mobile.

Selon une autre caractéristique, chacune des première et deuxième fentes s'étend entre une première extrémité, débouchant au niveau du premier ou deuxième bord latéral, ainsi qu'une deuxième extrémité opposée à la première extrémité et présente un axe médian, reliant les première et deuxième extrémités, formant un angle inférieur ou égal à 20° avec un plan vertical et perpendiculaire au plan médian vertical.

Selon une autre caractéristique, l'articulation comprend au moins deux pattes de liaison déformables comportant une première partie solidaire de la paroi mobile, une deuxième partie solidaire de la partie fixe ainsi qu'une partie intermédiaire en oméga reliant les première et deuxième parties.

Selon une autre caractéristique, chaque patte de liaison est réalisée en un matériau se déformant de manière plastique lorsque la paroi mobile passe de la potion fermée à la position ouverte.

D'autres caractéristiques et avantages ressortiront de la description de l'invention qui va suivre, description donnée à titre d'exemple uniquement, en regard des dessins annexés parmi lesquels :
- La figure 1 est une vue en perspective d'une structure secondaire d'un mât d'aéronef illustrant un mode de réalisation,
- La figure 2 est une vue en perspective d'une porte de surpression en position fermée illustrant un mode de réalisation de l'art antérieur,
- La figure 3 est une coupe longitudinale de la porte de surpression visible sur la figure 2 en position ouverte,
- La figure 4 est une vue de dessous de la porte de surpression visible sur la figure 2 en position fermée,
- La figure 5 est une vue en perspective, depuis une zone extérieure d'une structure secondaire d'un mât d'aéronef, d'un dispositif de surpression en position fermée illustrant un mode de réalisation de l'invention,
- La figure 6 est une coupe longitudinale d'un dispositif de surpression illustrant un mode de réalisation de l'invention,
- La figure 7 est une coupe transversale d'un dispositif de surpression illustrant un mode de réalisation de l'invention,
- La figure 8 est une vue de dessous d'un dispositif de surpression illustrant un mode de réalisation de l'invention,
- La figure 9 est une vue en perspective d'une partie d'une articulation d'un dispositif de surpression illustrant un mode de réalisation de l'invention,
- La figure 10 est une coupe transversale d'un système de maintien en position fermée d'un dispositif de surpression illustrant un mode de réalisation de l'invention,
- La figure 11 est une vue en perspective du système de maintien en position fermée visible sur la figure 10.

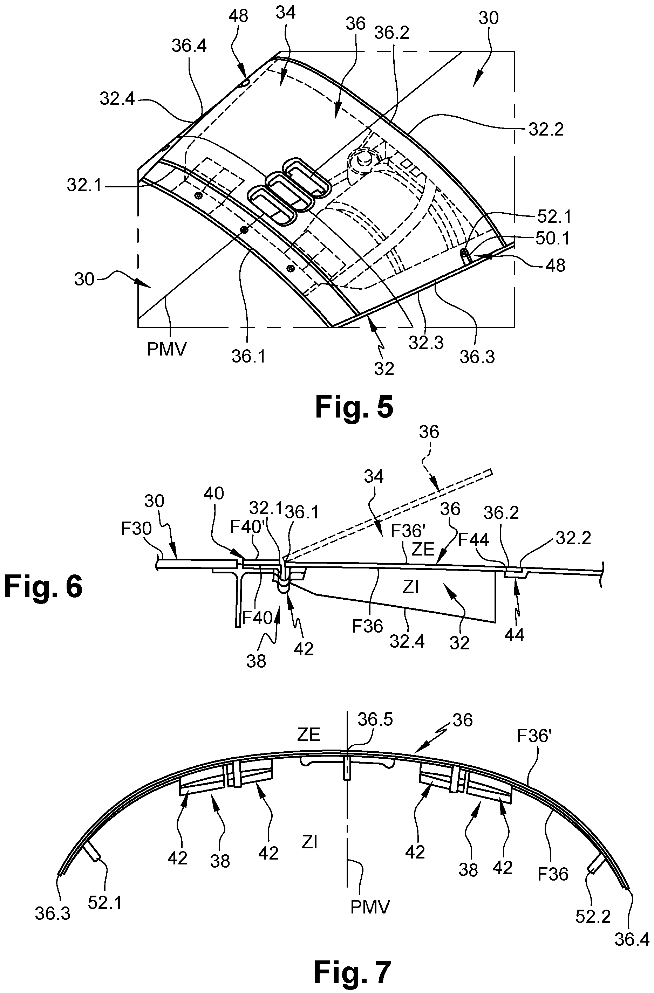

Selon un mode de réalisation visible sur les figures 5 à 8, un carénage 30 sépare une zone intérieure ZI positionnée au-dessous du carénage 30 et une zone extérieure ZE positionnée au-dessus du carénage 30. Selon une application, le carénage 30 correspond à une structure secondaire d'un mât d'aéronef.

Le carénage 30 comprend une ouverture 32 permettant de faire communiquer les zones intérieure et extérieure ZI et ZE ainsi qu'un dispositif de surpression 34 comportant au moins une paroi mobile 36 configurée pour occuper une position fermée dans laquelle la paroi mobile 36 obture l'ouverture 32 et isole les zones intérieure et extérieure ZI, ZE ainsi qu'une position ouverte dans laquelle la paroi mobile 36 dégage au moins partiellement l'ouverture 32, les zones intérieure et extérieure ZI, ZE communiquant entre elles. Autour de l'ouverture 32, le carénage 30 comprend une face extérieure F30 en contact avec un flux aérodynamique. La paroi mobile 36 présente une face intérieure F36 orientée vers la zone intérieure ZI et une face extérieure F36' orientée vers la zone extérieure ZE affleurante avec la face extérieure F30 du carénage 30.

Selon un mode de réalisation, la paroi mobile 36 est symétrique par rapport à un plan médian vertical PMV. Elle comprend un premier bord transversal 36.1 positionné dans un premier plan sensiblement perpendiculaire au plan médian vertical PMV, un deuxième bord transversal 36.2 positionné dans un deuxième plan sensiblement parallèle au premier plan et perpendiculaire au plan médian vertical PMV ainsi que des premier et deuxième bords latéraux 36.3, 36.4 reliant les premier et deuxième bords transversaux 36.1, 36.2 et symétriques par rapport au plan médian vertical PMV.

Selon ce mode de réalisation, l'ouverture 32 comprend des premier et deuxième côtés transversaux 32.1, 32.2 positionnés dans des plans sensiblement perpendiculaires au plan médian vertical PMV ainsi que des premier et deuxième côtés latéraux 32.3, 32.4 reliant les premier et deuxième côtés transversaux 32.1, 32.2.

La paroi mobile 36 et l'ouverture 32 sont configurées de sorte qu'il subsiste un jeu nul ou faible entre respectivement les premier et deuxième bords transversaux 36.1, 36.2 de la paroi mobile 36 et les premier et deuxième côtés transversaux 32.1, 32.2 de l'ouverture 32 ainsi qu'entre respectivement les premier et deuxième bords latéraux 36.3, 36.4 de la paroi mobile 36 et les premier et deuxième côtés latéraux 32.3, 32.4 de l'ouverture 32 en l'absence de déformation de la paroi mobile 36.

Par faible jeu, on entend que chaque bord 36.1 à 36.4 de la paroi mobile 36 est séparé du côté 32.1, 32.4 de l'ouverture 32 correspondant d'une distance inférieure ou égale à 5 mm.

Selon une application, le dispositif de surpression 34 est positionné au niveau de la structure secondaire d'un mât d'aéronef de manière à ce que le plan médian vertical PMV de la paroi mobile 36 soit confondu avec le plan médian vertical PMV du mât d'aéronef. Le premier bord transversal 36.1 est orienté vers l'avant de l'aéronef et le deuxième bord transversal 36.2 est orienté vers l'arrière de l'aéronef. Bien entendu, l'invention n'est pas limitée à cette application. Ainsi, un aéronef peut comprend un ou plusieurs dispositif(s) de surpression. Selon un mode de réalisation, comme illustré sur la figure 7, la paroi mobile 36 présente un rayon de courbure dans un plan transversal (vertical et perpendiculaire au plan médian vertical PMV). Selon ce mode de réalisation, la paroi mobile 36 comprend, au niveau du plan médian vertical PMV, une génératrice supérieure 36.5 reliant les premier et deuxième bords transversaux 36.1, 36.2, décalée vers le haut par rapport aux premier et deuxième bords latéraux 36.3, 36.4.

Selon une configuration, la paroi mobile 36 présente une forme approximativement cylindrique.

La paroi mobile 36 est configurée pour pouvoir se déformer, notamment lorsque la pression dans la zone intérieure ZI augmente, de manière à ce que les premier et deuxième bords latéraux 36.3, 36.4 se rapprochent.

Le dispositif de surpression 34 comprend au moins une partie fixe 40 ainsi qu'au moins une articulation 38 reliant la paroi mobile 36 et la partie fixe 40. Selon une configuration, la partie fixe 40 comprend, au niveau du premier côté 32.1 de l'ouverture 32, une paroi qui comprend une face intérieure F40 orientée vers la zone intérieure ZI et une face extérieure F40' orientée vers la zone extérieure ZE. Selon un agencement, dans le cas d'un dispositif de surpression 34 positionné sur la structure secondaire d'un mât d'aéronef, la partie fixe 40 est une paroi positionnée à l'avant de la paroi mobile 36, l'articulation 38 reliant le premier bord transversal 36.1 de la paroi mobile 36 et la paroi fixe 40.

Selon un mode de réalisation non représenté, l'articulation 38 comprend des cols de cygne.

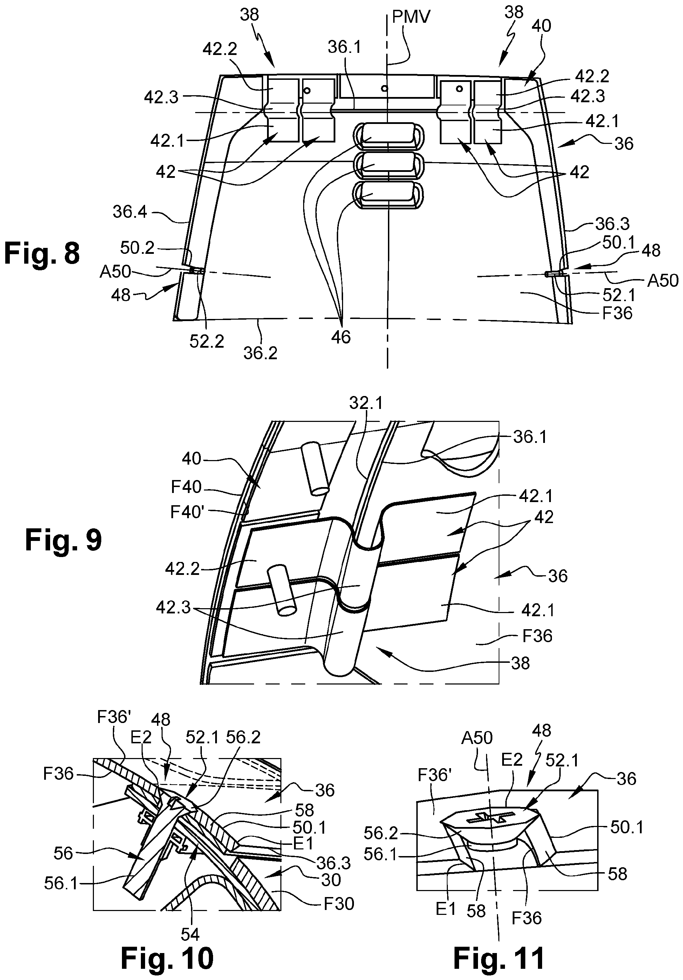

Selon un autre mode de réalisation visible notamment sur les figures 8 et 9, l'articulation 38 comprend au moins deux pattes de liaison 42 déformables positionnées de part et d'autre du plan médian vertical PMV, chaque patte de liaison 42 comprend une première partie 42.1 solidaire de la paroi mobile 36, une deuxième partie 42.2 solidaire de la partie fixe 40 ainsi qu'une partie intermédiaire 42.3 en oméga reliant les première et deuxième parties 42.1, 42.2. La première partie 42.1 est plaquée contre la face intérieure F36 de la paroi mobile 36 et reliée à cette dernière par collage, par soudage ou grâce à des éléments de fixation traversants comme des rivets ou des boulons par exemple.

La deuxième partie 42.2 est plaquée contre la face intérieure F40 de la paroi fixe 40 et reliée à cette dernière par collage, par soudage ou grâce à des éléments de fixation traversants comme des rivets ou des boulons par exemple.

Au moins une zone de la partie intermédiaire 42.3 est écartée des parois mobile et fixe 36, 40 et décalée vers la zone intérieure ZI par rapport à ces dernières.

Chaque patte de liaison 42 se présente sous la forme d'une fine bande de matière comme une tôle par exemple.

Selon un mode de réalisation, chaque patte de liaison 42 est réalisée en un matériau se déformant de manière plastique lorsque la paroi mobile 36 passe de la potion fermée à la position ouverte. Selon une configuration, chaque patte de liaison 42 est en acier inoxydable de nuance Z6 par exemple. Grâce à la capacité des pattes de liaison 42 à se déformer de manière plastique et non élastique, la paroi mobile 36 tend à rester en position ouverte et à ne pas se refermer en raison d'éventuelles propriétés élastiques des pattes de liaison 42. Selon un agencement visible sur la figure 8, l'articulation 38 comprend quatre pattes de liaison 42 disposées de manière symétrique par rapport au plan médian vertical PMV.

Le fait de prévoir des pattes de liaison 42 au lieu de cols de cygne permet de réduire l'encombrement, les coûts et la masse de l'articulation 38.

Selon une configuration visible sur la figure 6, la partie fixe 40 comprend un rebord transversal 44 positionné à l'opposé de l'articulation 38, au niveau du deuxième bord transversal 36.2 de la paroi mobile 36, présentant une face de contact F44 contre laquelle la paroi mobile 36 est en contact lorsqu'elle est en position fermée. La face de contact F44 est décalée vers la zone intérieure ZI par rapport à la face extérieure F30 du carénage 30 de sorte que la face extérieure F36' de la paroi mobile 36 et la face extérieure F30 du carénage soient affleurantes lorsque la paroi mobile 36 est en position fermée.

Selon un mode de réalisation, le dispositif de surpression 34 comprend au moins un lien pour maintenir la paroi mobile 36 entrebâillée, positionné au niveau du deuxième bord 36.2, à l'opposé de l'articulation 38, reliant la paroi mobile 36 et le carénage 30.

Selon une configuration, la paroi mobile 36 comprend au moins un orifice 46 la traversant. Selon une configuration, la paroi mobile 36 comprend plusieurs orifices 46 oblongs (chacun d'eux étant symétrique par rapport au plan médian vertical PMV).

Le dispositif de surpression 34 comprend également au moins un système de maintien 48 configuré pour maintenir la paroi mobile 36 dans la position fermée tant qu'une pression dans la zone intérieure ZI est inférieure à une valeur de pression donnée. Lorsque la pression dans la zone intérieure ZI atteint la valeur de pression donnée, la paroi mobile occupe un état déformé donné.

Selon un mode de réalisation, le système de maintien 48 comprend une première fente 50.1 traversant la paroi mobile 36 et débouchant au niveau de son premier bord latéral 36.3, une deuxième fente 50.2 traversant la paroi mobile 36 et débouchant au niveau de son deuxième bord latéral 36.4, un premier élément de maintien 52.1 solidaire de la partie fixe 40, positionné au niveau du premier côté latéral 32.3 de l'ouverture 32 et configuré pour coopérer avec la première fente 50.1 lorsque la paroi mobile 36 est en position fermée et dans un état non déformé ainsi qu'un deuxième élément de maintien 52.2 solidaire de la partie fixe 40, positionné au niveau du deuxième côté latéral 32.4 de l'ouverture 32 et configuré pour coopérer avec la deuxième fente 50.2 lorsque la paroi mobile 36 est en position fermée et dans un état non déformé.

Selon une configuration, la partie fixe 40 comprend un premier rebord latéral 54, au droit de la première fente 50.1, contre lequel la face intérieure F36 de la paroi mobile 36 prend appui en position fermée et à l'état non déformé ainsi qu'un deuxième rebord latéral, au droit de la deuxième fente 50.2, contre lequel la face intérieure F36 de la paroi mobile 36 prend appui en position fermée et à l'état non déformé.

Comme illustré sur les figures 10 et 11, chacun des premier et deuxième éléments de maintien 52.1, 52.2 se présente sous la forme d'une vis 56 qui comprend un corps 56.1 vissé dans la partie fixe, plus particulièrement dans le premier ou deuxième rebord latéral 54, ainsi qu'une tête 56.2 présentant une section supérieure à la plus petite section de la première ou deuxième fente 50.1, 50.2.

Selon une configuration, la tête 56.2 est une tête fraisée. En complément, chacune des première et deuxième fentes 50.1, 50.2 présente un chant 58 qui s'évase de la face intérieure F36 vers la face extérieure F36'. Selon une configuration, les portions opposées du chant 58 délimitant la première ou deuxième fente 50.1, 50.2 forment un angle sensiblement identique à l'angle formé par la tête fraisée. Ainsi, chacune des première et deuxième fentes 50.1, 50.2 présente une plus petite section au niveau de la face intérieure F36 de la paroi mobile 36 qui est supérieure à la section du corps 56.1 de la vis 56 et inférieure à la plus grande section de la tête 56.2 de la vis 56 ainsi qu'une plus grande section au niveau de la face extérieure F36' de la paroi mobile 36 qui est sensiblement égale à la plus grande section de la tête 56.2 de la vis 56.

L'épaisseur de la paroi mobile 36 et l'écartement entre la tête 56.2 de la vis 56 et la partie fixe 40 (plus particulièrement le premier ou deuxième rebord latéral 54) sont ajustés de sorte qu'à l'état non déformé de la paroi mobile 36, cette dernière soit plaquée contre les premier et deuxième rebords latéraux 54 et la tête 56.2 de chaque vis 56 soit affleurante avec la face extérieure F36' de la paroi mobile 36.

Selon une particularité de l'invention, les premier et deuxième éléments de maintien 52.1, 52.2 sont positionnés sur la partie fixe 40 de sorte qu'ils soient logés respectivement dans les première et deuxième fentes 50.1, 50.2 et maintiennent la paroi mobile dans la position fermée tant que la pression dans la zone intérieure ZI est inférieure à la valeur de pression donnée et que la paroi mobile 36 n'a pas atteint l'état déformé donné et qu'ils ne soient plus logés dans les première et deuxième fentes 50.1, 50.2 et ne maintiennent plus la paroi mobile 36 dans la position fermée dès que la pression dans la zone intérieure ZI est supérieure ou égale à la valeur de pression donnée et que la paroi mobile 36 a atteint l'état déformé donné. Selon un agencement, chacune des première et deuxième fentes 50.1, 50.2 s'étend entre une première extrémité E1, débouchant au niveau du premier ou deuxième bord latéral 36.3, 36.4, ainsi qu'une deuxième extrémité E2 opposée à la première extrémité E1 et présente une longueur (distance entre les première et deuxième extrémités E1, E2) telle que chacun des premier et deuxième éléments de maintien 52.1, 52.2 soit positionné au niveau de la deuxième extrémité E2 de la première ou deuxième fente 50.1, 50.2 dans laquelle il est logé lorsque la paroi mobile 36 est à l'état non déformé.

Selon une configuration, chacune des première et deuxième fentes 50.1, 50.2 présente un axe médian A50, reliant les première et deuxième extrémités E1, E2, qui forme un angle inférieur ou égal à 20° par rapport à un plan vertical et perpendiculaire au plan médian vertical PMV. Selon un agencement, les première et deuxième fentes 50.1, 50.2 sont symétriques par rapport au plan médian vertical PMV. Les première et deuxième fentes 50.1, 50.2 sont séparées du deuxième bord transversal 36.2 d'une distance inférieure au 1/3 de la longueur de la paroi mobile 36 qui correspond à la distance séparant les premier et deuxième bords transversaux 36.1, 36.2.

Bien entendu, l'invention n'est pas limitée à ce mode de réalisation. Quel que soit le mode de réalisation, la paroi mobile 36 est configurée pour se déformer selon au moins une direction de déformation, notamment en cas de surpression dans la zone intérieure ZI, de sorte que des premier et deuxième bords opposés, sécants avec la direction de déformation, se rapprochent, la partie fixe 40 à laquelle est reliée la paroi mobile 36 étant sensiblement indéformable. En complément, le système de maintien 48 comprend au moins une première fente 50.1 traversant la paroi mobile 36 et débouchant au niveau d'un des premier et deuxième bords opposés de la paroi mobile 36 ainsi que, pour chaque fente 50.1, un premier élément de maintien 52.1 solidaire de la partie fixe 40, positionné au niveau d'un des côtés de l'ouverture 32 et configuré pour coopérer avec la première fente 50.1 lorsque la paroi mobile 36 est en position fermée et dans un état non déformé. Le premier élément de maintien 52.1 et la première fente 50.1 sont configurés de sorte que le premier élément de maintien 52.1 soit logé dans la première fente 50.1 et maintienne la paroi mobile 36 dans la position fermée tant que la pression dans la zone intérieure ZI est inférieure à la valeur de pression donnée et que la paroi mobile 36 n'a pas atteint l'état déformé donné et que le premier élément de maintien 52.1 ne soit plus logé dans la première fente 50.1 et ne maintienne plus la paroi mobile 36 dans la position fermée dès que la pression dans la zone intérieure ZI est supérieure ou égale à la valeur de pression donnée et que la paroi mobile 36 a atteint l'état déformé donné.

Selon une configuration, la direction de déformation est sensiblement perpendiculaire aux premier et deuxième bords latéraux 36.3, 36.4. En complément, le système de maintien 48 comprend au moins une fente débouchant sur l'un des premier et deuxième bords latéraux 36.3, 36.4. Selon un agencement, le système de maintien 48 comprend des première et deuxième fentes 50.1, 50.2 débouchant sur chacun des premier et deuxième bords latéraux 36.3, 36.4, comme illustré sur les figures 5, 7 et 8.

Selon une autre configuration, la direction de déformation est sensiblement perpendiculaire aux premier et deuxième bords transversaux 36.1, 36.2, l'articulation 38 qui relie la paroi mobile 36 et la paroi fixe étant positionnée au niveau du premier bord transversal 36.1. En complément, le système de maintien 48 comprend une fente débouchant sur le deuxième bord transversal 36.2 opposé à celui où est positionnée l'articulation 38.

Quel que soit le mode de réalisation, chaque système de maintien selon l'invention présente un encombrement, des coûts et une masse inférieurs à ceux des systèmes de verrouillage de l'art antérieur.

## Revendications

1. Aéronef comprenant au moins un dispositif de surpression comportant au moins une partie fixe (40) ainsi qu'au moins une paroi mobile (36) configurée pour occuper une position fermée dans laquelle la paroi mobile (36) obture une ouverture (32) et isole des zones intérieure et extérieure (ZI, ZE) positionnées de part et d'autre de la paroi mobile (36) ainsi qu'une position ouverte dans laquelle la paroi mobile (36) dégage au moins partiellement l'ouverture (32), la paroi mobile (36) présentant une face intérieure (F36) orientée vers la zone intérieure (ZI) et une face extérieure (F36') orientée vers la zone extérieure (ZE), le dispositif de surpression comportant au moins une articulation (38) reliant la paroi mobile (36) et la partie fixe (40) ainsi qu'au moins un système de maintien (48) configuré pour maintenir la paroi mobile (36) dans la position fermée tant qu'une pression dans la zone intérieure (ZI) est inférieure à une valeur de pression donnée, la paroi mobile (36) comprenant au moins un bord (36.1 à 36.4); la paroi mobile (36) étant configurée pour se déformer de sorte que la paroi mobile (36) occupe un état déformé donné lorsque la pression dans la zone intérieure (ZI) est à la valeur de pression donnée; **caractérisé en ce que** le système de maintien (48) comprend au moins une première fente (50.1) traversant la paroi mobile (36) et débouchant au niveau du bord de la paroi mobile (36) ainsi que, pour chaque fente (50.1), un premier élément de maintien (52.1) solidaire de la partie fixe (40), le premier élément de maintien (52.1) et la première fente (50.1) étant configurés de sorte que :
- le premier élément de maintien (52.1) soit logé dans la première fente (50.1) et maintienne la paroi mobile (36) dans la position fermée tant que la paroi mobile (36) n'est pas à l'état déformé donné,
- le premier élément de maintien (52.1) ne soit plus logé dans la première fente (50.1) et ne maintienne plus la paroi mobile (36) dans la position fermée dès que la paroi mobile (36) est à l'état déformé donné,
**en ce que** chaque élément de maintien (52.1, 52.2) se présente sous la forme d'une vis (56) qui comprend un corps (56.1) vissé dans la partie fixe (40) ainsi qu'une tête (56.2) fraisée et **en ce que** chaque fente (50.1, 50.2) présente un chant (58) qui s'évase de la face intérieure (F36) vers la face extérieure (F36') de la paroi mobile (36), la tête (56.2) présentant une section supérieure à la plus petite section de la fente (50.1, 50.2) dans laquelle est logé l'élément de maintien (52.1, 52.2).

2. Aéronef selon la revendication 1, **caractérisé en ce que** la paroi mobile comprend des premier et deuxième bords transversaux (36.1, 36.2) ainsi que des premier et deuxième bords latéraux (36.3, 36.4), l'articulation (38) étant positionnée au niveau du premier bord transversal (36.1), **en ce que** la paroi mobile (36) est configurée pour se déformer selon une direction de déformation sensiblement perpendiculaire aux premier et deuxième bords transversaux (36.1, 36.2) de sorte que les premier et deuxième bords transversaux (36.1, 36.2) se rapprochent lorsque la paroi mobile (36) se déforme et **en ce que** le système de maintien (48) comprend au moins une fente (50.1, 50.2) débouchant sur l'un des premier et deuxième bords latéraux (36.3, 36.4).

3. Aéronef selon la revendication précédente, **caractérisé en ce que** le système de maintien (48) comprend des première et deuxième fentes (50.1, 50.2) débouchant sur chacun des premier et deuxième bords latéraux (36.3, 36.4).

4. Aéronef selon la revendication précédente, **caractérisé en ce que** la paroi mobile (36) est sensiblement symétrique par rapport à un plan médian vertical (PMV) sensiblement perpendiculaire aux premier et deuxième bords transversaux (36.1, 36.2) et **en ce que** les première et deuxième fentes (50.1, 50.2) sont sensiblement symétriques par rapport au plan médian vertical (PMV).

5. Aéronef selon la revendication précédente, **caractérisé en ce que** la paroi mobile (36) comprend une longueur correspondant à une distance séparant les premier et deuxième bords transversaux (36.1, 36.2) et **en ce que** les première et deuxième fentes (50.1, 50.2) sont séparées du deuxième bord transversal (36.2) d'une distance inférieure au 1/3 de la longueur de la paroi mobile (36).

6. Aéronef selon la revendication 4 ou 5, **caractérisé en ce que** chacune des première et deuxième fentes (50.1, 50.2) s'étend entre une première extrémité (E1) débouchant au niveau du premier ou deuxième bord latéral (36.3, 36.4) ainsi qu'une deuxième extrémité (E2) opposée à la première extrémité (E1) et présente un axe médian (A50), reliant les première et deuxième extrémités (E1, E2), formant un angle inférieur ou égal à 20° avec un plan vertical et perpendiculaire au plan médian vertical (PMV).

7. Aéronef selon l'une des revendications précédentes, **caractérisé en ce que** l'articulation (38) comprend au moins deux pattes de liaison (42) déformables comportant une première partie (42.1) solidaire de la paroi mobile (36), une deuxième partie (42.2) solidaire de la partie fixe (40) ainsi qu'une partie intermédiaire (42.3) en oméga reliant les première et deuxième parties (42.1, 42.2).

8. Aéronef selon la revendication précédente, **caractérisé en ce que** chaque patte de liaison (42) est réalisée en un matériau se déformant de manière plastique lorsque la paroi mobile (36) passe de la position fermée à la position ouverte.

## Patentansprüche

1. Luftfahrzeug mit wenigstens einer Überdruckvorrichtung, die wenigstens einen festen Teil (40) sowie wenigstens eine bewegliche Wand (36) aufweist, die so eingerichtet ist, dass diese eine geschlossene Stellung einnimmt, in der die bewegliche Wand (36) eine Öffnung (32) verschließt und innere und äußere Zonen (ZI, ZE) trennt, die beidseits der beweglichen Wand (36) angeordnet sind, sowie dass diese eine offene Stellung einnimmt, in der die bewegliche Wand (36) die Öffnung (32) wenigstens teilweise freigibt, wobei die bewegliche Wand (36) eine Innenseite (F36) aufweist, die der inneren Zone (ZI) zugewandt ist, und eine Außenseite (F36') aufweist, die der äußeren Zone (ZE) zugewandt ist, und wobei die Überdruckvorrichtung wenigstens ein Gelenk (38) aufweist, das die bewegliche Wand (36) und den festen Teil (40) verbindet, sowie wenigstens ein Haltesystem (48) aufweist, das so eingerichtet ist, dass es die bewegliche Wand (36) in der geschlossenen Stellung hält, solange ein Druck in der inneren Zone (ZI) unter einem gegebenen Druckwert liegt, wobei die bewegliche Wand (36) wenigstens einen Rand (36.1 bis 36.4) aufweist und wobei die bewegliche Wand (36) so eingerichtet ist, dass sie sich verformt, so dass die bewegliche Wand (36) einen gegebenen verformten Zustand einnimmt, wenn der Druck in dem inneren Bereich (ZI) einen gegebenen Druckwert hat, **dadurch gekennzeichnet, dass** das Haltesystem (48) wenigstens einen ersten Schlitz (50.1) aufweist, der die bewegliche Wand (36) durchquert und im Bereich des Randes der beweglichen Wand (36) mündet, sowie für jeden Schlitz (50.1) ein erstes Halteelement (52.1) umfasst, das fest mit dem festen Teil (40) verbunden ist, wobei das erste Halteelement (52.1) und der erste Schlitz (50.1) so eingerichtet sind, dass:
- das erste Halteelement (52.1) in dem ersten Schlitz (50.1) untergebracht ist und die bewegliche Wand (36) in der geschlossenen Stellung hält, solange die bewegliche Wand (36) nicht in dem gegebenen verformten Zustand ist,
- das erste Halteelement (52.1) nicht mehr in dem ersten Schlitz (50.1) untergebracht ist und die bewegliche Wand (36) nicht mehr in der geschlossenen Stellung hält, sobald sich die bewegliche Wand (36) in dem gegebenen verformten Zustand befindet,
dass jedes Halteelement (52.1, 52.2) in Form einer Schraube (56) vorliegt, die einen Körper (56.1), der in den festen Teil (40) eingeschraubt ist, sowie einen gefrästen Kopf (56.2) aufweist, und dass jeder Schlitz (50.1, 50.2) eine Kante (58) aufweist, die sich von der Innenseite (F36) zur Außenseite (F36') der beweglichen Wand (36) hin erweitert, wobei der Kopf (56.2) einen Querschnitt aufweist, der größer ist als der kleinste Querschnitt des Schlitzes (50.1, 50.2), in dem das Halteelement (52.1, 52.2) untergebracht ist.

2. Luftfahrzeug nach Anspruch 1, **dadurch gekennzeichnet, dass** die bewegliche Wand eine erste und eine zweite Querkante (36.1, 36.2) sowie eine erste und eine zweite Seitenkante (36.3, 36.4) umfasst, wobei das Gelenk (38) auf Höhe der ersten Querkante (36.1) angeordnet ist, dass die bewegliche Wand (36) so eingerichtet ist, dass sie sich in einer Verformungsrichtung im Wesentlichen im rechten Winkel zur ersten und zweiten Querkante (36.1, 36.2) verformt, so dass sich die erste und die zweite Querkante (36.1, 36.2) einander annähern, wenn sich die bewegliche Wand (36) verformt, und dass das Haltesystem (48) wenigstens einen Schlitz (50.1, 50.2) aufweist, der an einer der ersten und zweiten Seitenkanten (36.3, 36.4) mündet.

3. Luftfahrzeug nach dem vorhergehenden Anspruch, **dadurch gekennzeichnet, dass** das Haltesystem (48) einen ersten und einen zweiten Schlitz (50.1, 50.2) umfasst, die jeweils an den ersten und zweiten Seitenkanten (36.3, 36.4) münden.

4. Luftfahrzeug nach dem vorhergehenden Anspruch, **dadurch gekennzeichnet, dass** die bewegliche Wand (36) im Wesentlichen symmetrisch bezüglich einer vertikalen Mittelebene (PMV) ist, die im Wesentlichen im rechten Winkel zur ersten und zweiten Querkante (36.1, 36.2) verläuft, und dass der erste und zweite Schlitz (50.1, 50.2) im Wesentlichen symmetrisch in Bezug auf die vertikale Mittelebene (PMV) sind.

5. Luftfahrzeug nach dem vorhergehenden Anspruch, **dadurch gekennzeichnet, dass** die bewegliche Wand (36) eine Länge aufweist, die einem Abstand zwischen der ersten und der zweiten Querkante (36.1, 36.2) entspricht, und dass sich der erste und der zweite Schlitz (50.1, 50.2) in einem Abstand zur zweiten Querkante (36.2) befinden, der kleiner als 1/3 der Länge der beweglichen Wand (36) ist.

6. Luftfahrzeug nach Anspruch 4 oder 5, **dadurch gekennzeichnet, dass** sich jeder der ersten und zweiten Schlitze (50.1, 50.2) zwischen einem ersten Ende (E1), das im Bereich der ersten oder zweiten Seitenkante (36.3, 36.4) mündet, sowie einem zweiten Ende (E2) erstreckt, das dem ersten Ende (E1) gegenüberliegt, und eine Mittelachse (A50) aufweist, die das erste und das zweite Ende (E1, E2) verbindet und mit einer vertikalen Ebene, die im rechten Winkel zur vertikalen Mittelebene (PMV) verläuft, einen Winkel von kleiner oder gleich 20° bildet.

7. Luftfahrzeug nach einem der vorhergehenden Ansprüche, **dadurch gekennzeichnet, dass** das Gelenk (38) wenigstens zwei verformbare Verbindungslaschen (42) aufweist, die mit einem ersten Teil (42.1) versehen sind, der fest mit der beweglichen Wand (36) verbunden ist, und mit einem zweiten Teil (42.2) versehen sind, der fest mit dem festen Teil (40) verbunden ist, sowie mit einem Omega-förmigen Zwischenteil (42.3) versehen sind, der den ersten und den zweiten Teil (42.1, 42.2) verbindet.

8. Luftfahrzeug nach dem vorhergehenden Anspruch, **dadurch gekennzeichnet, dass** jede Verbindungslasche (42) aus einem Material besteht, das sich plastisch verformt, wenn die bewegliche Wand (36) von der geschlossenen Stellung in die offene Stellung bewegt wird.

## Claims

1. Aircraft including at least one pressure-relief device including at least one fixed part (40) as well as at least one mobile wall (36) configured to occupy a closed position in which the mobile wall (36) blocks an opening (32) and isolates interior and exterior zones (ZI, ZE) on respective opposite sides of the mobile wall (36) as well as an open position in which the mobile wall (36) at least partly frees the opening (32), the mobile wall (36) having an interior face (F36) oriented toward the interior zone (ZI) and an exterior face (F36') oriented toward the exterior zone (ZE), the pressure-relief device including at least one articulation (38) connecting the mobile wall (36) and the fixed part (40) as well at least one retaining system (48) configured to retain the mobile wall (36) in the closed position as long as a pressure in the interior zone (ZI) is lower than a given pressure value, the mobile wall (36) having at least one edge (36.1 to 36.4), the mobile wall (36) being configured to be deformed so that the mobile wall (36) occupies a given deformed state if the pressure in the interior zone (ZI) is at the given pressure value, **characterized in that** the retaining system (48) includes at least one first slot (50.1) through the mobile wall (36) opening at the level of the edge of the mobile wall (36) as well as, for each slot (50.1), a first retaining element (52.1) fastened to the fixed part (40), the first retaining element (52.1) and the first slot (50.1) being configured so that:
- the first retaining element (52.1) is accommodated in the first slot (50.1) and retains the mobile wall (36) in the closed position as long as the mobile wall (36) is not in the given deformed state,
- the first retaining element (52.1) is no longer accommodated in the first slot (50.1) and no longer retains the mobile wall (36) in the closed position as soon as the mobile wall (36) is in the given deformed state,
**in that** each retaining element (52.1, 52.2) takes the form of a screw (56) that includes a body (56.1) screwed into the fixed part (40) as well as a milled head (56.2), and **in that** each slot (50.1, 50.2) has an edge surface (58) that is flared from the interior face (F36) to the exterior face (F36') of the mobile wall (36), the head (56.2) having a section greater than the smallest section of the slot (50.1, 50.2) in which the retaining element (52.1, 52.2) is accommodated.

2. Aircraft as claimed in claim 1, **characterized in that** the mobile wall has first and second transverse edges (36.1, 36.2) as well as first and second lateral edges (36.3, 36.4), the articulation (38) being positioned at the level of the first transverse edge (36.1), **in that** the mobile wall (36) is configured to be deformed in a deformation direction substantially perpendicular to the first and second transverse edges (36.1, 36.2) so that the first and second transverse edges (36.1, 36.2) are moved closer together when the mobile wall (36) is deformed, and **in that** the retaining system (48) includes at least one slot (50.1, 50.2) opening onto one of the first and second lateral edges (36.3, 36.4).

3. Aircraft as claimed in the preceding claim, **characterized in that** the retaining system (48) includes first and second slots (50.1, 50.2) opening onto each of the first and second lateral edges (36.3, 36.4).

4. Aircraft as claimed in the preceding claim, **characterized in that** the mobile wall (36) is substantially symmetrical with respect to a vertical median plane (PMV) substantially perpendicular to the first and second transverse edges (36.1, 36.2) and **in that** the first and second slots (50.1, 50.2) are substantially symmetrical with respect to the vertical median plane (PMV).

5. Aircraft as claimed in the preceding claim, **characterized in that** the mobile wall (36) has a length corresponding to a distance separating the first and second transverse edges (36.1, 36.2) and **in that** the first and second slots (50.1, 50.2) are separated from the second transverse edge (36.2) by a distance less than 1/3 the length of the mobile wall (36).

6. Aircraft as claimed in claim 4 or 5, **characterized in that** each of the first and second slots (50.1, 50.2) extends between a first end (E1) opening at the level of the first or second lateral edge (36.3, 36.4) as well as a second end (E2) opposite the first end (E1) and has a median axis (A50) connecting the first and second ends (E1, E2) at an angle less than or equal to 20° to a vertical plane and perpendicular to the vertical median plane (PMV).

7. Aircraft as claimed in any one of the preceding claims, **characterized in that** the articulation (38) includes at least two deformable connecting lugs (42) including a first part (42.1) fastened to the mobile wall (36), a second part (42.2) fastened to the fixed part (40) as well as an omega-shape intermediate part (42.3) connecting the first and second parts (42.1, 42.2).

8. Aircraft as claimed in the preceding claim, **characterized in that** each connecting lug (42) is made of a material that is deformed plastically when the mobile wall (36) moves from the closed position to the open position.
